# EUROPEAN PATENT APPLICATION

(11) **EP 1 471 412 A1**
(43) Date of publication of application: **27.10.2004**
(21) Application number: 03015783.8
(22) Date of filing: 10.07.2003
(51) Int. Cl.: G06F 3/033, G06F 3/00

(54) **Haptic input device and method for navigating through a data set**

(30) Priority: 25.04.2003 EP 03009463
(71) Applicant: Sony International (Europe) GmbH, 10785 Berlin (DE)
(72) Inventor: Michelitsch, Georg, Stuttgart Tech. Center, 70327 Stuttgart (DE); Williams, Jason, Stuttgart Techn. Center, 70327 Stuttgart (DE)
(74) Representative: Körber, Martin, Dipl.-Phys.

(57) **Abstract**

In a haptic input device (10) and a haptic method for navigating through a data set a sphere-like surface (11) is defined which enables the input of navigation information by means of a rotational or rolling movement and a pressing or pushing movement of or on the sphere-like surface (11) wherein the pressing or pushing movement of the sphere (11) is antagonized by a haptic force (3) acting in an opposite direction. In this way, a precise control of the interaction and immediate backtracking is achieved which allows an intuitive navigation through data sets.

## Description

The present invention relates to a haptic input device and a method for navigating through a data set.

Navigation in large data sets involves the task of the user shifting his focus from one area of the space to another as well as the task of "drilling down" into, i.e., obtaining details of a selected data area. An example of data navigation in which these two operations are used is the visualization of a map on a computer display or screen. In a first step, the user has to search for a point or an area of interest on the map which is achieved by panning the available viewport around the map until the area the user is interested in is located. Once this area of interest has been located, the user will typically "zoom into" this area in order to obtain more detailed information, e.g., in order to find a specific location within the selected area Both operations (panning and zooming) are preferably supported by the ability to backtrack recently performed navigation operations which allows the user to go quickly to an earlier search position if he comes to the conclusion that he has navigated into a wrong location.

In addition, the navigation task can be made easier by allowing the user to filter out certain details of the data visualization. Again, in the above mentioned example of navigating through a map, the user could remove contour lines or colours for instance if all he is interested in would be the name of a certain street or a place.

In order to perform the different navigation operations, a user has to input a plurality of navigation commands into a computer system. Input devices which are nowadays usually used for this task are keyboards or computer mice. However, these "classical" input devices suffer from the drawback that an operation or manipulation of the input device cannot be intuitively linked to the navigation operation initiated or triggered by this operation. In other words, a user first has to learn several specific navigation commands which have to be entered by using the keyboard in order to navigate through the data in a desired way

As mentioned above, an intuitive link between panning or zooming and the corresponding manipulations of an input device combined with a natural way of backing out from each of those operations would greatly enhance the possibilities of data navigation. The requirement of such an intuitive link makes haptic techniques a prime choice for such interactions.

The term "haptics" has been used for years by researchers in human psychophysics who study how people use their hands and fingers to sense and manipulate objects. Recently, the term "haptic interfaces" has begun to be used by human interface technologists to describe devices that measure the motions of, and stimulate the sensory capabilities within, our hands. Such haptic interfaces offer the great advantage that a user - at the same time while he is manipulating the input device - obtains some output by way of a tactile or kinesthetic feedback This "feel" allows to generate an intuitive link between manipulations of the input device and actions being induced by the manipulations. Thus, a haptic input device could open up a new and effective way in data navigation.

Up to now, haptic interfaces or input devices are very rare. One new device which tries to deliver haptic stimulation to humans is the so-called PHANTOM device which has been developed by the Massachusetts Institute of Technology's Artificial Intelligence Laboratory. The PHANTOM - which is distributed by the company SensAble Technologies - is a convenient desktop device which provides a force-reflecting interface between a human user and a computer. The user connects to the mechanism by simply inserting his index finger into a thimble. The PHANTOM device tracks the motion of the user's finger tip and can actively exert an external force on the finger, creating compelling illusions of interaction with solid physical objects. A stylus can be substituted for the thimble and users can feel the tip of the stylus touch virtual surfaces.

Although the PHANTOM device allows a certain kind of haptic interaction, this device is obviously not able to provide the interactions which are necessary for the above-mentioned operations in data navigation.

Another input device for the use with a computer system or as a robot or machine controller is disclosed in US Patent no. 5,923,318 The known device consists of a freely movable spherical housing which is dimensioned to be gripped by the fingers and thumb of a user's hand The housing contains a switch which can be actuated by squeezing the sphere. Further, position detector means are provided which are able to determine the position and orientation of a sensor which is located within the housing. Although this known input device allows to generate a plurality of different input signals, a haptic interaction or a tactile feedback is not provided.

Thus, there is a need for a new method and an input device which allows an effective data navigation by using at least partly haptic interactions

According to the present invention, there is provided a haptic input device for navigating through a data set. Said input device defines a sphere-like surface enabling the input of navigation information by means of a rotational or rolling movement and a pressing or pushing movement of or on the sphere-like surface, wherein the pressing or pushing movement of the sphere is antagonized by a haptic force acting in an opposite direction.

The input device of the present invention for generating navigation commands for the navigation through a data set is based on a model which relies on the metaphor of a tennis ball which is submersed in water Similar to a trackball, the sphere-like surface can be rotated wherein this rotational movement is transferred into a navigation information which can be for instance used to pan over a map in order to locate a possible area of interest In addition to the rotation, the sphere-like surface can be further manipulated (for example pushed into a certain direction) in order to generate further navigation commands. For example, a user could zoom into the map by pushing it in a direction perpendicular to the rotational or rolling movement, i.e., by pressing down onto the sphere-like surface, wherein the pushing movement of the sphere-like surface is antagonized by a haptic force acting in an opposite direction. The ability to control panning and zooming with one co-ordinated hand gesture further allows the user to backtrack from a wrong navigation move in an easy way. In this way, a precise control of the interaction and immediate backtracking is achieved which allows an intuitive navigation through map-based visualizations of data Further, the haptic force acting in an opposite direction to the pushing movement generates a tactile feedback information which improves the intuitive actuation of the input device.

According to a preferred embodiment of the present invention, the sphere-like surface can further be pushed into the same directions as it can be rotated These manipulations could for example be used to change the step width used to navigate through the data set, e g , to accelerate the speed of panning over a map. Further the sphere-like surface could be squeezed in order to change the information level or the number or nature of details to be displayed

The haptic input device according to the present invention can be realized in different ways In a first embodiment a configuration with three PHANTOM devices is used The three devices are configured and arranged in such a way that three fingers of the users hand can grab a virtual sphere and perform the interaction operations described above.

A second embodiment is a dedicated device which has been specifically designed for that purpose. The second embodiment comprises a sphere accommodated in a casing which sphere can by rotated, pushed downward against a spring-loaded arrangement and pushed further into the directions of rotation. The device further comprises means for sensing the pressure applied to the sphere when it is squeezed by the user of the input device.

The present invention also relates to a haptic method for navigating through a data set, wherein said method defines a sphere-like surface enabling the input of navigation information by means of a rotational or rolling movement and a pressing or pushing movement of or on the sphere-like surface.

In the following, the present invention is explained in more detail by means of a preferred embodiment shown in the enclosed drawings in which
- Fig. 1: is a schematic view of a specific model used as basis for a haptic input device according to the present invention;
- Fig. 2: shows the interaction primitives of the input device according to the present invention used for navigating in a map based visualization; and
- Fig 3: shows a preferred embodiment of an input device according to the present invention in form of a haptic trackball.

The different options for manipulating the input device of the present invention in order to generate commands which are used to navigate through a data set will now be explained with reference to the visualization of a map on a computer system. However, it is to be understood that the haptic input device in accordance with the present invention could also be used in other applications. Another possible application is for example the visualization and manipulation of 3D objects in CAD/CAM applications. Further, computer games could be made significantly more engaging by introducing new possibilities of entering commands and signals which would by possible by using an input device of the present invention.

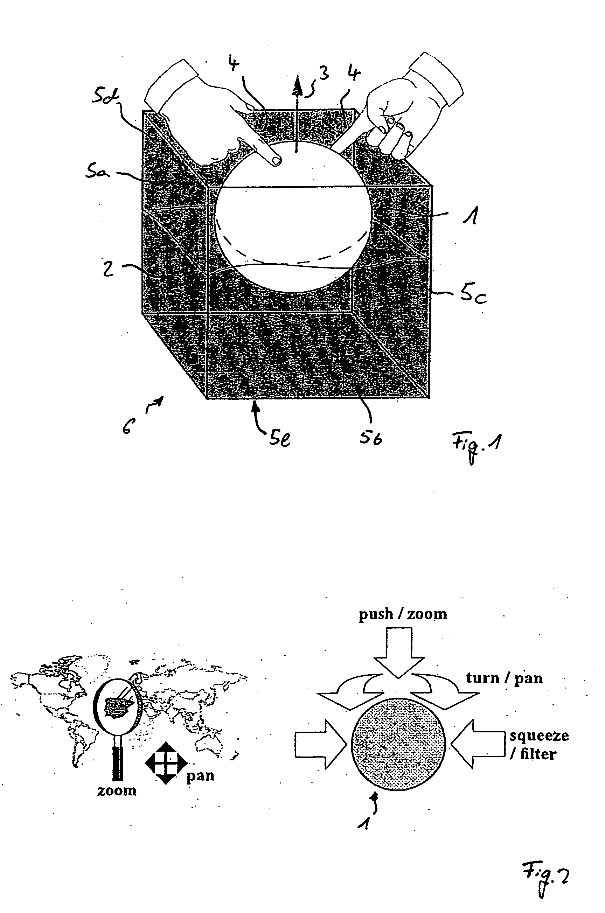

As already mentioned, the method and the device of the present invention for generating navigation commands for the navigation through a data set is based on a model which relies on the metaphor of a tennis ball which is submersed in water. As shown in Fig 1, a virtual sphere 1 that adheres to the laws of rigid body physics behaves as if submersed in water 2 by applying an antagonizing negative gravity force (indicated by the arrow 3) to the sphere 1.

The sphere 1 shown in Fig. 1 can be manipulated by the hands or fingers 4 of a user in different ways in order to generate commands which are used for navigating through a map visualized on the display of a computer system (see Fig. 2). As a first step, the sphere 1 can be (similar to a classical trackball) rotated wherein the associated visualization of the data in a map like fashion is panned accordingly. Thus, a user can pan over the map in order to locate a possible area of interest by rotating the sphere 1. After he has selected such an area of interest, he probably wants to obtain more detailed information, i.e., he wants to zoom into the map which is achieved by pressing the sphere 1 downward, i.e., in a direction perpendicular to the rotational or rolling movement.

The ability to control panning and zooming with one co-ordinated hand gesture allows the user also to backtrack from a wrong navigation move in an easy way. As a result of a multi-finger grip on the sphere 1, each movement or manipulation in one direction can easily be counter-balanced by a similar movement by the opposing fingers 4. In this way, a precise control of the interaction and immediate backtracking is achieved which allows an intuitive navigation through map-based visualizations of data.

These two manipulations (rotating and pressing down the sphere 1) are the two basic interaction techniques which are necessary for navigating through a data set which is visualized as a two- or three-dimensional surface or map. In addition to these basic operations, pressing the sphere 1 against the four sidewalls 5a to 5d of the container 6 which contains the water 2 as well as squeezing the sphere 1 could also result in control commands for controlling the visualization of the data.

In case the user squeezes the sphere 1 with his fingers 4 from two sides, this gesture could be interpreted to mean making the sphere 1 smaller. This reduction in size could be used as a metaphor for removing layers of information from the visualization shown on the screen, equivalent to a change of the parameters of a filter applied on the visualized data. Further, when pressing the sphere 1 against one of the four sidewalls 5a to 5d of the container, the pressure applied to the sphere 1 could by used to accelerate the speed of panning in an isometric fashion.

The possible navigation movements as well as the associated gestures or manipulations of the sphere are summarized in Fig. 2.

For the panning operation initiated by a rotation of the sphere 1, two rotation gestures and associated navigation movements are possible which are roughly equally well accepted. According to a first option, the visualization of the map is moved in the same direction in which the sphere is rotated Another option is based on the metaphor of "rolling" the sphere over the map. Here, the visualization of the map is moved in the opposite direction compared to the first option. Since different users may have different preferences, the input device of the present invention is preferably provided with a switch which allows to select one of the two strategies.

For the zooming operation initiated by pressing the sphere 1 downwards, also various interaction styles are possible. As will be shown in the following, these strategies differ extremely in their effectiveness.

According to a first strategy, the elevation of the sphere 1 is mapped directly to the zoom factor applied. At the top position the visualization is shown in the lowest possible zoom level, i.e., the least details are shown, whereas in the lowest possible position of the sphere 1 the highest zoom level is set, i.e, the most detailed view is presented.

This way of operating has the advantage that it is intuitive. However, it suffers from the fact that keeping the visualization at a certain zoom level requires the user to balance an inherently unstable object at a certain position in a space.

According to another strategy, the position of the sphere 1 at the bottom of the container 6 - in the following referred to as the neutral position - keeps the currently set zoom level at its current value To zoom in, the user has to push the sphere 1 against the bottom surface 5e of the container. The higher the pressure the higher the zoom factor that is chosen. Once the desired zoom level has been found the user has to release the pressure exerted on the sphere and to return it to the neutral position. In order to zoom out, the user lets the sphere 1 float up against the receding hand guiding the sphere 1. As the sphere 1 passes pre-set thresholds on its way to the top, the zoom level is adjusted accordingly until the lowest zoom level is set as the sphere 1 reaches the top position

This second approach significantly enhances the ability of the user to keep the sphere 1 under control and to adjust the zoom level to a desired value although the asymmetry of the hand gesture for zooming in and zooming out is a small disadvantage.

Both strategies explained above are only a small subset of possible combinations of gestures possible with a setup in accordance with the present invention.

All of the above interaction techniques can also be combined with a special damping strategy which is called "Inverted Damping" and disclosed in the European Patent Application EP 1 184 982 A1. For example, the movement along the Y-axis is damped according to the speed of hand movement, ie, the higher the speed the lower the resistance The same technology can also be applied to rotational movements such as those for controlling the panning operation

In the following, two possibilities for realizing a haptic input device providing the above described interaction techniques are described. A first embodiment is based on a general haptic user interface such as the PHANTOM device. A second embodiment is a dedicated device which has been specifically designed for that purpose.

In case of the PHANTOM based solution, a configuration with three PHANTOM devices is used The three devices are configured in such a way that three fingers of the user's hand can grab a virtual sphere and perform the operations described above. A specially designed software controls the three PHANTOM devices in order to transfer the movements of the finger tips into the corresponding manipulations of the virtual sphere and to generate the navigation commands assigned thereto.

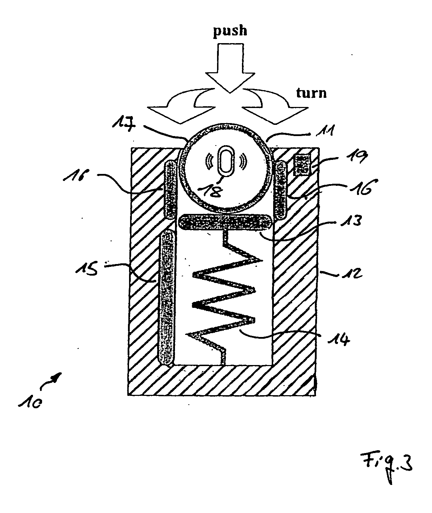

In case of a physical realization of an input device that supports the above mentioned interaction techniques, a setup as shown in Fig. 3 is used

The input device 10 shown in Fig. 3 consists of a trackball like configuration with a ball or sphere 11 being rotatably mounted in a cylinder like casing 12. The input device 10 further comprises a spring-loaded assembly which allows the sphere 11 to be pressed down while at the same time the sphere 11 is also able to rotate.

In the embodiment shown in Fig. 3, the spring-loaded assembly in a piston-like configuration comprises a movable plate 13 forming a resting platform for the sphere 11 wherein the plate 13 is spring-loaded by a spring coil 14 which is mounted at the bottom surface of the casing 12 The position of the plate 13 and therefore also the pressure being exerted on the sphere 11 in the downward direction is registered by a position sensor 15 which is mounted within the casing 12. Alternatively to the configuration shown in Fig. 3, the spring coil 14 could be replaced by another damper or electrical motors

According to a preferred embodiment, the volume below the plate 13 within the casing 11 could be additionally filed with a so-called magneto-rheological or MR fluid. Such an MR fluid - which is for example provided by the LORD Corporation - is essentially a suspension of micro-sized magnetizable particles in oil Under normal conditions, an MR fluid is a free-flowing liquid with a consistency similar to that of motor oil. However, by an exposure of the MR fluid with a magnetic field, the fluid can be transformed within milliseconds into a near-solid Thus, the negative gravity force which has to be applied to the sphere 11 as schematically shown in Fig. 1 can be easily controlled by using a piston-like configuration comprising a spring coil and an MR fluid

As further shown in Fig 3, a circular configuration of optical sensors 16 encloses the area of the casing 12 where the sphere 11 moves or rotates The movement of the sphere 11 is picked up by these sensors 16 which could be optical sensors (preferably photo diodes). The motion vectors of the sphere 11 are calculated based on the change of the surface patterns picked up by the sensors 16. These surface patterns can be the result of natural variations in the surface material applied to the sphere 11. Alternatively, the surface of the sphere can be provided with a pattern specifically designed for that purpose

The sphere 11 itself is covered with an array of pressure sensors 17 which are connected to a transmitter 18 located within the sphere 11. The measured values of the pressure which is applied by the user to the sphere 11 is transmitted from the transmitter 18 inside the sphere 11 to a receiver 19 which is located in the casing 12 by a wireless transmission technology Potential candidates for the data transmission are the Bluetooth communication standard as a high-cost solution or radio frequency (RF) tags for a low-cost solution. In case of the second solution, a passive RF tag - as it is for example provided by the company BELGRAVIUM - is used as transmitter 18 which operates without a separate external power source and obtains his operating power by the receiver 19 or the base via a wireless link Thus, this second solution has the additional advantage that there is no need for embedding a power supply to the sphere

The input device according to the present invention can be used in all applications where a mouse or a trackball would be normally used. In general, all navigation tasks that require a combination of direction setting plus speed or level-of-detail control could benefit from the interaction and control possibilities provided by the present invention.

Applications inside a car such as controlling a driver information or navigation system would be appropriate for the present invention as well since the force feedback mechanisms described above can also be used to counter-balance unintended motions of the driver's hand while he is driving the car.

Furthermore, several categories of consumer electronic devices (e.g. CD players, tape recorders, tuners, etc.) could benefit from the disclosed invention. In this case the navigation gestures described above can be used to select a title or channel from a large list of available titles or channels. Pushing down the sphere could start playing the selected song, pushing further downward would speed up the playback speed (cuing) Further, squeezing the sphere would stop the playback As a matter of fact, different mappings of the gestures described above to the commands understood by such a playback device are also possible.

Finally, another beneficial application of the above disclosed invention is in the domain of video games. For example, the navigation in virtual worlds can be combined with "firing" gestures through squeezing Pushing down the sphere could be mapped to an increase in the speed of movement

Thus, the present invention provides new possibilities for generating commands which are used for navigating through data sets. Since the manipulations of the - virtual or real - sphere can be intuitively linked to corresponding navigation commands, an easy-to-understand and extremely effective data navigation is provided.

## Claims

1. Haptic input device (10) for navigating through a data set, said input device (10) defining a sphere-like surface (11) enabling the input of navigation information by means of a rotational or rolling movement and a pushing movement of or on the sphere-like surface (11),
wherein the pressing or pushing movement of the sphere (11) is antagonized by a haptic force (3) acting in an opposite direction.

2. Haptic input device according to claim 1,
wherein the sphere-like surface (11) can be pushed in a direction perpendicular to the rotational or rolling movement.

3. Haptic input device according to claim 1 or 2,
wherein the high of the force antagonizing the pushing movement increases with an increase of the pushing movement.

4. Haptic input device according to one of the claims 1 to 3,
wherein the sphere-like surface (11) can be pushed into the same directions as the rotational or rolling movement.

5. Haptic input device according to one of the claims 1 to 4,
wherein the sphere-like surface (11) can be squeezed and said input device comprises means for measuring the pressure applied to the sphere-like surface (11).

6. Haptic input device for navigating through a data set comprising at least three haptic interfaces wherein each interface tracks the motion of one finger (4) of a user and exerts an external force on that finger (4),
and wherein the three interfaces are configured in such a way that the fingers (4) can grab a virtual sphere (1) and perform the operations according to one of the claims 1 to 5 in order to input navigation information.

7. Haptic input device according to one of the claims 1 to 5,
comprising a sphere (11) which is rotatably mounted in a casing (12),
wherein said input device (10) further comprises sensors (16) which determine a rotational movement of the sphere (11)

8. Haptic input device according to claim 7,
wherein said sensors (16) for measuring a rotation of the sphere (11) are optical sensors which determine a change in the surface pattern of the sphere (11).

9. Haptic input device according to claim 7 or 8,
wherein said sphere (11) rests on a platform (13) which is movable in a direction perpendicular to the rotational movement
and wherein the input device (10) further comprises a sensor (15) for measuring the position of the platform (13).

10. Haptic input device according to claim 9,
wherein the platform (13) is mounted within the casing (12) via a spring-loaded assembly.

11. Haptic input device according to claim 10,
wherein the spring-loaded assembly comprises a spring coil (14) mounted on the bottom of the casing (12).

12. Haptic input device according to claim 11,
further comprising a piston-like configuration which comprises said spring coil (14) and an magneto-rheological fluid.

13. Haptic input device according to one of the claims 7 to 12,
wherein the surface of the sphere (11) is covered with an array of pressure sensors (17) which determine a pressure value when the sphere (11) is squeezed.

14. Haptic input device according to claim 13,
wherein the pressure values measured by the sensors (17) are wirelessly transmitted from an transmitter (18) inside the sphere (11) to a receiver (19) which is located outside of the sphere (11).

15. Haptic input device according to claim 14,
wherein the data are transmitted by using the Bluetooth communication standard.

16. Haptic input device according to claim 14,
wherein the transmitter (18) located within the sphere (11) is a passive radio frequency tag

17. Haptic input method for navigating through a data set, said method defining a sphere-like surface (11) enabling the input of navigation information by means of a rotational or rolling movement and a pressing or pushing movement of or on the sphere-like surface (11),
wherein the pressing or pushing movement of the sphere (11) is antagonized by a haptic force (3) acting in an opposite direction.

18. Haptic input method according to claim 17,
wherein a rotational or rolling movement of the sphere-like surface (11) initiates a panning operation for moving the viewport of an associated visualization of the data in a map like fashion.

19. Haptic input method according to claim 17 or 18,
wherein the sphere-like surface (11) can be pushed in a direction perpendicular to the rotational or rolling movement.

20. Haptic input method according to one of the claims 17 to 19,
wherein the high of the force antagonizing the pushing movement increases with an increase of the pushing movement.

21. Haptic input method according to one of the claims 17 to 20,
wherein the pushing movement of the sphere-like surface (11) determines the zoom factor or the level of displayed details of the visualized data.

22. Haptic input method according to claim 21,
wherein the zoom factor or level of displayed details remains unchanged when the sphere-like surface (11) is located in a neutral position,
and wherein the zoom factor or level of displayed details increases when the sphere-like surface (11) is pushed downward and increases when it is moved upward.

23. Haptic input method according to one of the claims 17 to 22,
wherein the sphere-like surface (11) can be pushed into the same directions as the rotational or rolling movement.

24. Haptic input method according to claim 18 and claim 23,
wherein the pushing movement in one of these directions increases the speed of the panning operation.

25. Haptic input method according to one of the claims 17 to 24,
wherein the sphere-like surface (11) can be squeezed.

26. Haptic input method according to claim 25,
wherein the squeezing interaction determines parameters of a filter applied on the data to be visualized.
